# EUROPEAN PATENT APPLICATION

(11) **EP 2 317 615 A1**
(43) Date of publication of application: **04.05.2011**
(21) Application number: 09174583.6
(22) Date of filing: 30.10.2009
(51) Int. Cl.: H02B 13/025

(54) **Heat Transfer Assembly for Electrical Installation**

(71) Applicant: Eaton Industries (Netherlands) B.V., 7559 SC Hengelo (NL)
(72) Inventor: Lammers, Arend, 7558 TV Hengelo (NL); Schoten, Frederik, 7443 TS Nijverdal (NL); Geusendam, Paulus, 7559 NB Hengelo (NL)
(74) Representative: Tabeling, Marcella M.J.

(57) **Abstract**

The invention relates to a heat transfer assembly for transferring heat from an element under electrical tension, comprising a first heat transfer assembly part thermally connectable to the element under electrical tension; a second heat transfer assembly part thermally connected to the first heat transfer assembly part, an electrically insulating filling material for electrically insulating the first heat transfer assembly part from the second heat transfer assembly part, wherein the first heat transfer assembly part comprises a primary heat pipe which in use has a condenser part being remote from the element under electrical tension, wherein the primary heat pipe and the second heat transfer assembly part overlap each other over an effective length at the condenser part of the primary heat pipe, and wherein the filling material is provided between the primary heat pipe and the second heat transfer assembly part over at least the effective length.

## Description

### Field of the invention

The present invention relates to a heat transfer assembly for transferring heat from an element under electrical tension, comprising a first heat transfer assembly part thermally connectable to the element under electrical tension; a second heat transfer assembly part thermally connected to the first heat transfer assembly part, an electrically insulating filling material for electrically insulating the first heat transfer assembly part from the second heat transfer assembly part.

### Prior art

International patent application WO 2006/053452 discloses an electrically insulating hollow body for a cooling high-voltage loadable element, comprising a heat pipe structure with an electrically insulating tube. Additional layers (diffusion barrier and vapour layer) are needed to insure proper insulation.

European patent application EP-A-1 898 505 discloses a switchgear comprising heat pipes to transport heat to a condenser outside the cabinet. The vapor/liquid channel to the condenser comprises an insulating tube to electrically insulate the condenser from the actual heat pipe which is connected to live current carrying elements.

German patent application DE-A-39 05 875 discloses a heat pipe structure for cooling power semiconductors. The heat pipe comprises a heat source part and a heat sink part, which are electrically insulated from each other by an electrically insulating tube.

German patent application DE-A-199 35 658 discloses a device for transferring heat from a gas insulated switchgear, in which a conductive part (e.g. connected to a busbar) is connected to a conductor outside an enclosure using an electrically insulating and heat conducting body that penetrates the enclosure. The outside conductor may be connected to a cooling body.

### Summary of the invention

The present invention seeks to provide an assembly for transferring heat away from a hot spot in an electrical installation. Such a hot spot is located at one or more elements in the electrical installation which are under electrical tension. These elements are for example the live parts or conductors in a switchgear. The elements either carry current themselves or they are connected with current carrying elements and hence are under electrical tension.

According to the present invention, a heat transfer assembly according to claim 1 is provided. This arrangement is relatively simple while providing at the same time an electrically insulation and effective heat transfer solution.

In a further embodiment, the first heat transfer assembly part comprises an additional thermally conductive body in thermal contact with the condenser part of the first heat transfer assembly part. This allows increasing effectively the outside surface of the condenser part of the primary heat pipe with a more efficient thermal energy transfer as result.

In an even further embodiment, the first heat transfer assembly part comprises at least one primary heat pipe, and the second heat transfer assembly part comprises at least one secondary heat pipe, the at least one primary heat pipe and at least one secondary heat pipe being positioned substantially parallel to each other. In both heat transfer assembly parts advantageously use is made of a heat pipe which is known to be very efficient for transferring heat.

According to another embodiment the heat transfer assembly comprises two primary heat pipes and two secondary heat pipes, the primary heat pipes being positioned at equal distances to each of the secondary heat pipes. This further increases the (virtual) contact surfaces between the primary and secondary heat pipes, increasing the thermal energy transfer there between.

In still another embodiment one of the heat transfer assembly parts comprises one heat pipe and the other heat transfer assembly part comprises a plurality of heat pipes, wherein the plurality of heat pipes are positioned concentrically around the one heat pipe. The amount of heat transfer surface between the primary and secondary heat pipes is further increased. Also, in the case that the secondary heat pipes are surrounding the primary heat pipe (connected to the hot spot), the secondary heat pipes function as an electrical shielding of the primary heat pipe (which may be at high electrical potential), obviating the need of a separate electrical shield.

Further or alternatively, the second heat transfer assembly part comprises a heat sink. The heat sink may comprise cooling fins that extend radially. The fins can be effective in dissipating heat by convection cooling to surrounding air or other fluid.

The filling material may be an epoxy material for example Aratherm® epoxy. The filling material may also be an electrically insulating ceramic material, such as Al₂O₃ or AIN. To obtain even further improved properties for the entire heat transfer assembly, thermally conductive paste may be applied to fill possible existing gaps between the different materials.

In a further aspect, the present invention relates to an electrical installation, such as a switchgear, comprising an element under electrical tension and a heat transfer assembly, wherein the heat transfer assembly is thermally connected to the element under electrical tension. In the case of a three-phase electrical installation, each of the conductors is preferably thermally connected with one heat transfer assembly.

The heat transfer assembly may be positioned inside an enclosure of the electrical installation, using the internal fluid as coolant medium for the second heat transfer assembly part, or the second heat transfer assembly part may at least partly protrude from the enclosure, allowing (additionally) cooling by outside air. Furthermore, the second heat transfer assembly part may be in contact with the enclosure (grounded), and may further comprise a heat sink outside of the enclosure.

### Short description of drawings

The present invention will be discussed in more detail below, using a number of exemplary embodiments, with reference to the attached drawings, in which:
Fig. 1 shows a cross sectional view along a longitudinal axis of a heat transfer assembly according to an embodiment of the present invention;
Fig. 2a and 2b show schematic drawings of a switchgear employing the heat transfer assembly of Fig. 1 in two different arrangements;
Fig. 3 shows a cross sectional view along a longitudinal axis of a further embodiment of the heat transfer assembly;
Fig. 4 shows a cross sectional view perpendicular to a longitudinal axis of an even further embodiment of the heat transfer assembly;
Fig. 5 shows a schematic view of a switchgear employing the heat transfer assembly of Fig. 6; and
Fig. 6 shows a cross sectional view of an even further embodiment of the heat transfer assembly.

### Detailed description of exemplary embodiments

Commercially available heat pipes have a very good thermal conductivity, typically 100 to 500 times better than pure copper of the same dimensions, but they are not electrically insulated. In order to be able to use heat pipes in electrical installations, such as medium voltage switchgear, where heat generated by an electric current has to be transported away from the installation, electrical insulation is necessary.

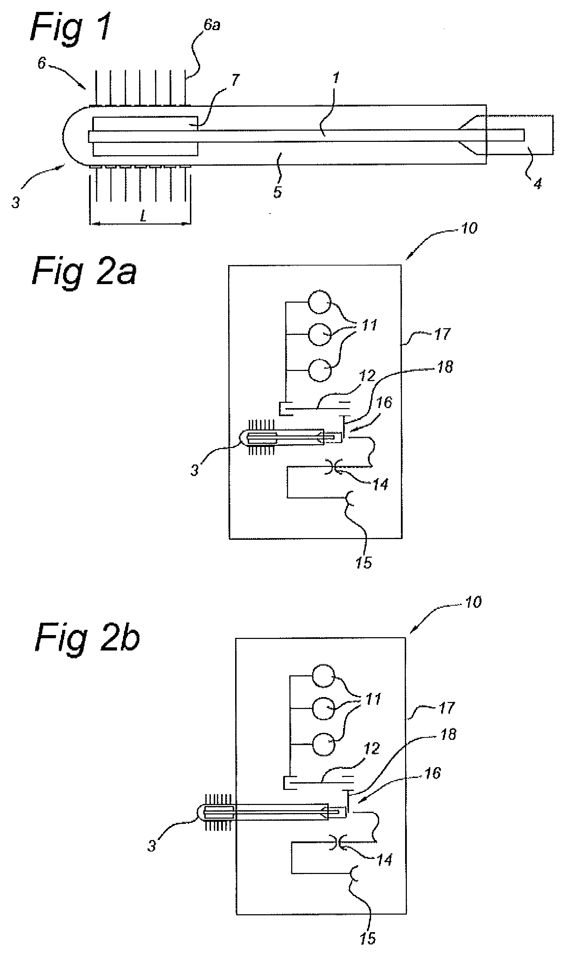

A first embodiment of a heat transfer assembly 3 according to the present invention is shown in the cross sectional view of Fig. 1. In general the heat transfer assembly 3 has an elongated tube like shape, and is able to transport heat from the right side to the left side in the drawing.

The heat transfer assembly 3 comprises a first heat transfer assembly part that comprises a heat pipe 1. In use the heat pipe 1 is thermally connected to an element under electrical tension of the electrical installation. Such an element is for example a conductor of a switchgear 10 (see Figs 2a and 2b). The heat pipe 1 can be thermally connected directly to the element or first to a mounting element 4, which can then be put in thermal contact with a hot spot in the switchgear 10. Further, the heat transfer assembly 3 comprises a second heat transfer assembly part that comprises a heat sink 6.

The heat pipe 1 used in the heat transfer assembly 3 is of a known type, e.g. using a fluid inside a hollow tube type. Inside the heat pipe 1 the fluid turns in vapour at the evaporator part (hot side) and will flow to the condenser part (cold side) of the heat pipe where it condenses back to liquid. This liquid returns to the evaporator part through capillary action or gravity action. According to the invention, the evaporator part of heat pipe 1 is located at a hot spot in the electrical installation, i.e. an element under electrical tension and/or a current carrying element. The condenser part of heat pipe 1 is remote from the hot spot. It is possible to use other types of heat pipes in a similar manner as in the embodiments shown.

The first and second heat transfer assembly parts overlap each other over an effective length L at the condenser part of the heat pipe 1. An electrically insulating and thermally conductive filling material 5, e.g. an epoxy material or a ceramic material, is applied between the heat transfer assembly parts over at least this effective length L.

The second heat transfer assembly part of the Fig 1 embodiment comprises a heat sink 6 comprising cooling fins 6a in contact with the filling material 5. The cooling fins 6a surround the first heat transfer assembly part over an effective length L. The cooling fins 6a allow transfer of the heat to surrounding air or fluid by convection.

In order to improve the heat transfer from the condenser part of heat pipe 1 to the cooling fins 6, an optional additional thermally conductive body, e.g. in the form of a metal sleeve 7 (e.g. copper) may be provided. The sleeve 7 surrounds the heat pipe 1 at its remote end and thus increases the heat transfer surface.

The heat transfer capacity in this embodiment is dependent on the effective length L of the heat pipe 1 which is covered by the heat sink 6 / cooling fins 6a, but also on the heat conducting properties of the filling material 5 which extends between the two heat transfer assembly parts over that length L.

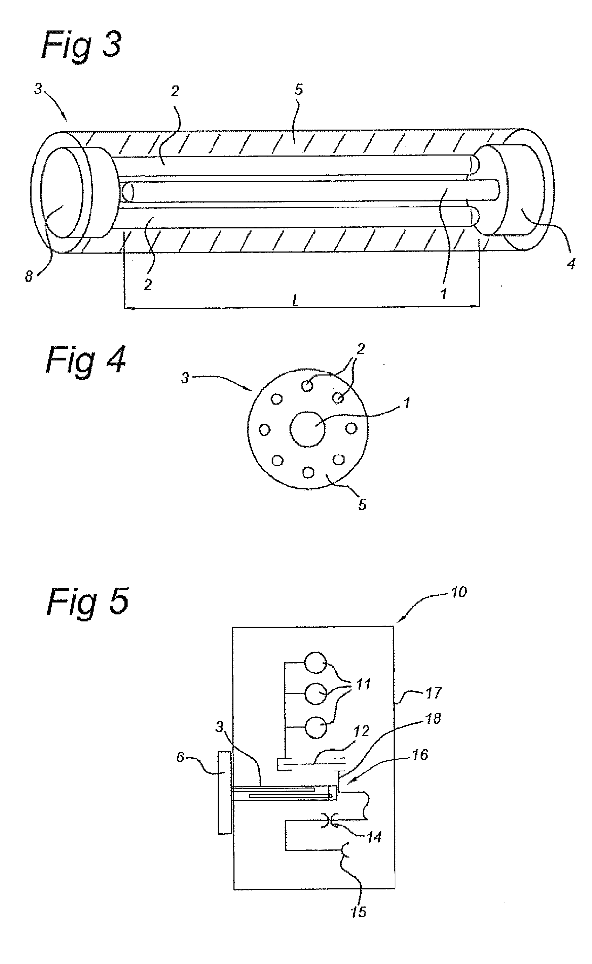

The heat transfer assembly 3 embodiment of Fig. 1 may be applied in electrical installations, such as a medium voltage switchgear 10 as schematically shown in Figs 2a, 2b and 5. The switchgear 10 comprises an enclosure 17, usually of metal and grounded to earth. The switchgear 10 comprises in these examples a number of interconnected current carrying elements, one of which is shown in Figs 2a, 2b and 5 with reference number 18. The element 18 carries current and is possibly at high potential. Other elements to which the heat transfer assembly 3 could be connected to may include for example: a bus bar system 11, a disconnector 12, a vacuum switch 14 and a connecting terminal 15. At a number of locations inside the switchgear 10, hot spots 16 may occur due to the electrical current. An exemplary position of a hot spot 16 is located between the disconnector 12 and the vacuum bottle 14, where a number of conductor elements 18 comprise bend and possibly smaller cross-sectional parts.

In the embodiment shown in Fig. 2a, the heat transfer assembly 3 is positioned to transfer heat from the hot spot 16 to another lower temperature area inside the enclosure 17. The fluid inside the enclosure 17, for example air or SF₆, will be used to further transport the heat from the heat transfer assembly 3 towards the enclosure 17.

In the embodiment shown in Fig. 2b, the heat transfer assembly 3 is positioned to transfer heat from the hot spot 16 to an area outside the enclosure 17. This allows efficient use of air outside the enclosure 17 to transfer heat from the cooling fins 6a of the heat transfer assembly 3 to the surroundings of the enclosure 17, which is more efficient than the embodiment of Fig. 2a. However, due to the conductive nature of the heat pipe 1, the possible high voltage on the hot spot 16 is brought outside the enclosure 17, only leaving the electrically insulating material 5 to protect against possible dangers. By having more electrically insulating material 5 at the part of the heat transfer assembly 3 projecting out of the enclosure 17, sufficient protection may be provided.

According to a further embodiment of the present invention the heat transfer assembly 3 comprises at least one primary heat pipe 1 and at least one secondary heat pipe 2. The at least one primary heat pipe 1 and at least one secondary heat pipe 2 are again elongated tube like heat pipes of conventional construction, and are positioned substantially parallel to each other. As a result a major part of the surface of the primary heat pipe 1 and of the secondary heat pipe 2 can face each other, and overlap over an effective length L.

An electrically insulating but thermally conducting filling material 5 is provided between the primary heat pipe 1 and secondary heat pipe 2, allowing the primary heat pipe 1 to be at high electrical potential, and the secondary heat pipe 2 at a low electrical potential, e.g. ground. In the embodiment shown in Fig. 3, the heat transfer assembly 3 comprises a mounting element 4 onto which two primary heat pipes 1 are attached (e.g. by soldering or welding). On the other side of the heat transfer assembly 3, a further connector 8 is provided with two secondary heat pipes 2 connected. The two primary heat pipes 1 and two secondary heat pipes 2 are of a similar dimension. Each primary heat pipe 1 is positioned at an equal distance to each of the secondary heat pipes 2. The electrically insulating filling material 5 is provided between and surrounding the primary and secondary heat pipes 1, 2 such that the heat transfer assembly 3 has a tube like shape.

In the Fig. 3 embodiment, again the heat transfer capacity of the heat transfer assembly 3 is dependent on a number of factors, such as the effective length L over which the primary heat pipes 1 and secondary heat pipes 2 overlap each other, the number of primary and secondary heat pipes 1, 2, the distance between the primary and secondary heat pipes, and the heat conducting properties of the filling material 5.

In a further embodiment of a heat transfer assembly 3, one of the heat transfer assembly parts comprises one heat pipe and the other heat transfer assembly part comprises a plurality of heat pipes. The plurality of heat pipes are positioned concentrically around the one heat pipe at equal distance to the one heat pipe. Either the one heat pipe or the plurality of heat pipes can be part of the first heat transfer assembly part and hence thermally connected to the hot spot of the electrical installation. In a preferred embodiment, and as shown in Fig. 4, the one heat pipe in the center is the primary heat pipe 1 connected to the hot spot. The secondary heat pipes 2 form a cage-like structure around the centrally positioned primary heat pipe 1, and the thermally conductive but electrically insulating filling material 5 is positioned between the heat pipes 1, 2 and surrounding the secondary heat pipes 2. This provides for an additional benefit that the secondary heat pipes 2 act as an electrical shielding of the primary heat pipe 1. Therefore the shape of the insulating filling material 5 can be more simple (tube-like outer surface) and additional electric shielding is not required.

An embodiment of the implementation of a heat transfer assembly 3 in a switchgear is shown in the schematic view of Fig. 5, in which the switchgear 10 comprises similar elements as discussed above in relation to the embodiments of Fig. 2a and 2b. The heat transfer assembly 3 is positioned in contact with the hot spot 16 in the switchgear. The remote end of the heat transfer assembly is connected to a heat sink 6, e.g. comprising a metal block provided with cooling fins. The heat sink 6 is located outside the enclosure 17, and hold at ground potential, just as the enclosure 17. Instead of a separate heat sink 6, the heat transfer assembly 3 can be connected to the enclosure of the installation, which will then act as a heat sink.

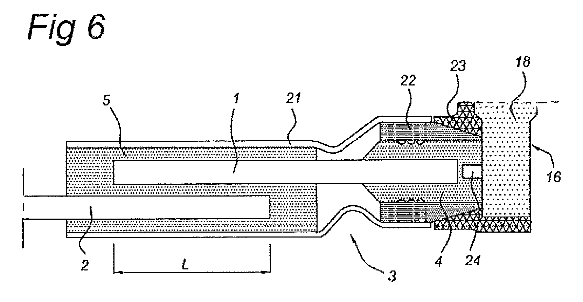

The embodiment of the heat transfer assembly 3, schematically shown in Fig. 5, is shown more in detail in Fig. 6. In this embodiment, one primary heat pipe 1 and one secondary heat pipe 2 are used. The primary heat pipe 1 and secondary heat pipe 2 are again substantially parallel to each other. The primary heat pipe 1 is connected to mounting element 4 which preferably is made of a material having good thermally conductive properties. The mounting element 4 is thermally connected to a hot spot 16 in an electrical installation. This can be a current carrying element 18, or an element under electrical tension that in itself does not carry current but is electrically connected with a current carrying element and therefore under electrical tension. The mounting element 4 can be attached to the element 18 under electrical tension by using a bolt connection 24.

In this embodiment, the electrically insulating and thermally conductive filler material 5 is contained in an outer sleeve 21. This sleeve 21 is also used to contain the mounting element 4 for connecting the heat transfer assembly 3 to the element 18 in the installation 10 (see Fig. 5). A rubber sleeve 22 surrounds the mounting element 4. The element 18 associated with the hot spot 16 is partly covered by casting resin 23, the shape of which is adapted to receive the heat transfer assembly 3. The rubber sleeve 22 ensures a good connection between mounting element 4 (and thus heat pipe 1) and the element 18 in all circumstances, and especially in the event that the thermal coefficients of expansion of these parts are different.

The secondary heat pipe 2 can be used to dissipate heat from hot spot 16, to a safe and preferably ventilated area within the installation, or to a heat sink 6 inside or outside of the installation.

In all embodiments, the filling material 5 may be an epoxy, e.g. Aratherm® epoxy, or an electrically insulating ceramic material, e.g. Al₂O₃ or AIN. To obtain even better properties for the entire heat transfer assembly, thermally conductive paste may be applied to fill possible existing gaps between the different materials.

It will be clear that further modifications and variations are possible to the detailed construction of the heat transfer assembly, e.g. the number of primary heat pipes 1 and secondary heat pipes 2, and their dimensions may be adapted to specific circumstances.

## Claims

1. Heat transfer assembly for transferring heat from an element (18) under electrical tension, comprising:
- a first heat transfer assembly part thermally connectable to the element (18) under electrical tension;
- a second heat transfer assembly part thermally connected to the first heat transfer assembly part,
- an electrically insulating filling material (5) for electrically insulating the first heat transfer assembly part from the second heat transfer assembly part,
**characterized in that** the first heat transfer assembly part comprises a primary heat pipe (1) which in use has a condenser part being remote from the element (18) under electrical tension, wherein the primary heat pipe (1) and the second heat transfer assembly part overlap each other over an effective length (L) at the condenser part of the primary heat pipe (1) , and wherein the filling material (5) is provided between the primary heat pipe (1) and the second heat transfer assembly part over at least the effective length (L).

2. Heat transfer assembly according to claim 1, in which the first heat transfer assembly part (1) comprises an additional thermally conductive body (7) in thermal contact with the condenser part of the first heat transfer assembly part (1).

3. Heat transfer assembly according to claim 1, in which the first heat transfer assembly part comprises at least one primary heat pipe (1), and the second heat transfer assembly part comprises at least one secondary heat pipe (2), the at least one primary heat pipe (1) and at least one secondary heat pipe (2) being positioned substantially parallel to each other.

4. Heat transfer assembly according to claim 3, in which the heat transfer assembly (3) comprises two primary heat pipes (1) and two secondary heat pipes (2), the primary heat pipes (1) being positioned at equal distances to each of the secondary heat pipes (2).

5. Heat transfer assembly according to claim 3, in which one of the heat transfer assembly parts comprises one heat pipe (1) and the other heat transfer assembly part comprises a plurality of heat pipes (2), wherein the plurality of heat pipes (2) are positioned concentrically around the one heat pipe (1).

6. Heat transfer assembly according to any one of claims 1-5, in which the second heat transfer assembly part (2) comprises a heat sink (6).

7. Heat transfer assembly according to claim 6, in which the heat sink (6) comprises cooling fins (6a) allowing convection cooling.

8. Heat transfer assembly according to any one of claims 1-7, in which the filling material (5) is an epoxy material.

9. Heat transfer assembly according to any one of claims 1-7, in which the filling material (5) is an electrically insulating ceramic material, such as Al₂O₃ or AIN.

10. Electrical installation, such as a switchgear, comprising an element (18) under electrical tension and a heat transfer assembly (3) according to any one of the claims 1-9, in which the heat transfer assembly (3) is thermally connected to the element (18) under electrical tension.

11. Electrical installation according to claim 10, comprising three elements (18) under electrical tension, wherein a heat transfer assembly is thermally connected to each element (18).

12. Electrical installation according to claim 10 or 11, further comprising an enclosure (17), wherein the heat transfer assembly (3) is positioned inside the enclosure (17).

13. Electrical installation according to claim 12, in which the second heat transfer assembly part (2) at least partly protrudes from the enclosure (17).
